Europäisches Patentamt

European Patent Office

Office européen des brevets

(19)

(11) Numéro de publication : **0 391 304 B1**

(12)   **FASCICULE DE BREVET EUROPEEN**

(45) Date de publication du fascicule du brevet :
**05.02.92 Bulletin 92/06**

(51) Int. Cl.⁵ : **A47J 37/08**

(21) Numéro de dépôt : **90106273.7**

(22) Date de dépôt : **02.04.90**

(54) **Grille-pain.**

(30) Priorité : **07.04.89 FR 8904625**

(43) Date de publication de la demande :
**10.10.90 Bulletin 90/41**

(45) Mention de la délivrance du brevet :
**05.02.92 Bulletin 92/06**

(84) Etats contractants désignés :
**DE ES GB IT**

(56) Documents cités :
**DE-A- 3 020 778**
**FR-A- 1 403 826**
**US-A- 2 330 644**
**US-A- 2 336 696**
**US-A- 2 566 904**
**US-A- 3 074 342**

(73) Titulaire : **MOULINEX**
**11, rue Jules-Ferry**
**F-93170 Bagnolet (FR)**

(72) Inventeur : **Basora San Juan, Antonio, c/o**
**Moulinex Espana**
**Diagonal 622**
**E-Barcelona 21 (ES)**

(74) Mandataire : **May, Hans Ulrich, Dr.**
**Patentanwalt Dr. H.U. May Thierschstrasse 27**
**W-8000 München 22 (DE)**

EP 0 391 304 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se rapporte à un grille-pain comportant un boîtier, une résistance chauffante commandée par un interrupteur associé à une minuterie, un chariot à pain guidé à l'intérieur du boîtier et pouvant occuper au moins deux positions, soit une position de grillage pour laquelle le chariot ferme l'interrupteur déclenchant la minuterie, et en laquelle le chariot est amené par l'utilisateur et maintenu pendant le cycle de grillage au moyen d'un doigt manoeuvré par un électroaimant qui vient en prise avec une butée du chariot, soit une position de repos en laquelle le chariot est amené au moyen d'un ressort de rappel, à la fin du cycle de grillage, quand le doigt libère la butée.

L'invention concerne, plus particulièrement, un grille-pain comportant un dispositif de maintien au chaud du pain grillé qui comprend un verrou monté mobile selon une direction, dite de verrouillage, transversale au déplacement du chariot et pouvant occuper deux positions, soit une position dite de maintien au chaud dans laquelle en fin de cycle de grillage, le chariot s'étant déplacé légèrement vers sa position de repos de manière à ouvrir l'interrupteur, le verrou est en prise avec un crochet porté par le chariot, soit une position d'éjection automatique pour laquelle le verrou est escamoté et n'entrave pas le déplacement du chariot.

Un tel dispositif a été décrit notamment dans le brevet US 2330644, dans lequel le dispositif de maintien au chaud comprend un verrou monté mobile au moyen d'une tringlerie compliquée actionnée par l'utilisateur et qui peut occuper une position pour laquelle l'interrupteur est ouvert et le chariot à pain est déplacé légèrement vers sa position de repos maintenant ainsi le pain grillé dans la chambre de grillage, ce maintien au chaud étant assuré automatiquement à chaque cycle de grillage. Cependant, le dispositif décrit présente de sérieux inconvénients, principalement, par ce qu'il comporte de nombreuses pièces articulées entre elles à savoir : barre flexible du crochet (22) elle-même montée sur un support pivotant (19) équipé d'une poignée (21), verrou (34) formé dans un levier (31) pivotant en (32), levier de commande manuelle (37-42) également monté pivotant en (38) dans un plan vertical et relié à une lame flexible (36) solidaire du levier (31).

Or on sait, et il est démontré que, non seulement, il est difficile de réaliser dans une fabrication en grande série un tel assemblage de pièces articulées, mais aussi, lors du fonctionnement et après plusieurs cycles successifs de grillage, les différentes pièces montées articulées entre-elles sont soumises à de fortes contraintes mécaniques dues à la combinaison de la dilatation des pièces enfermées dans un boîtier extrêmement chaud et des chocs répétés provoqués par la manipulation des poignées de commande par l'utilisateur.

Il s'avère que ces contraintes provoquent des jeux variés entre les différentes pièces articulées et des déformations permanentes des lames flexibles, rendant ainsi inopérant le maniement et ou le fonctionnement du verrou et donc la fiabilité du dispositif de maintien au chaud. De manière à palier ces inconvénients, l'invention prévoit de réaliser un verrou, d'une part, simple à fabriquer en grande série, économique et d'un fonctionnement fiable, et d'autre part, d'un maniement extrêmement simple pour l'utilisateur : une simple pression sur l'un des boutons permettant de sélectionner ou non pour chaque cycle de grillage le maintien au chaud. En outre, la visualisation du choix par le positionnement alterné des boutons est très pratique et évite toute erreur.

Selon l'invention le verrou mobile est monté coulissant grâce à des moyens de manoeuvre (A-B) qui comprennent deux boutons poussoir (A-B) susceptibles d'être manoeuvrés alternativement et montés coulissant transversalement à la direction de verrouillage (F) à l'encontre d'organes élastiques, soit un premier bouton (A) dit de maintien au chaud pouvant occuper une position de blocage pour laquelle il vient bloquer le verrou dans sa position d'éjection automatique, et une position d'enclenchement pour laquelle il permet au verrou d'occuper sa position de maintient au chaud, soit un deuxième bouton (B) dit d'éjection automatique pouvant occuper une position de déblocage pour laquelle il agit sur le verrou pour le ramener dans sa position d'éjection automatique et autorise le bouton (A) dit de maintien au chaud à passer de sa position d'enclenchement à sa position de blocage, et une position de désenclenchement pour laquelle il autorise le bouton (A) dit de maintien au chaud à passer de sa position de blocage à sa position d'enclenchement.

Grâce à cet actionnement réciproque des deux boutons poussoirs (A-B), on garantit de manière particulièrement simple et efficace la sélection du mode de fonctionnement du verrou, soit position d'éjection automatique, soit position de maintien au chaud.

Les autres caractéristiques et avantages de l'invention ressortiront d'ailleurs de la description qui va suivre, à titre d'exemple, en référence au dessin annexé dans lequel :

la figure 1 représente en coupe verticale le dispositif de maintien au chaud selon l'invention illustrant le verrou dans sa position d'éjection automatique ;

la figure 2 est une vue analogue à la figure 1 illustrant le verrou dans sa position de maintien au chaud ;

la figure 3 est une vue analogue à la figure 1 illustrant le verrou en retour dans sa position d'éjection automatique.

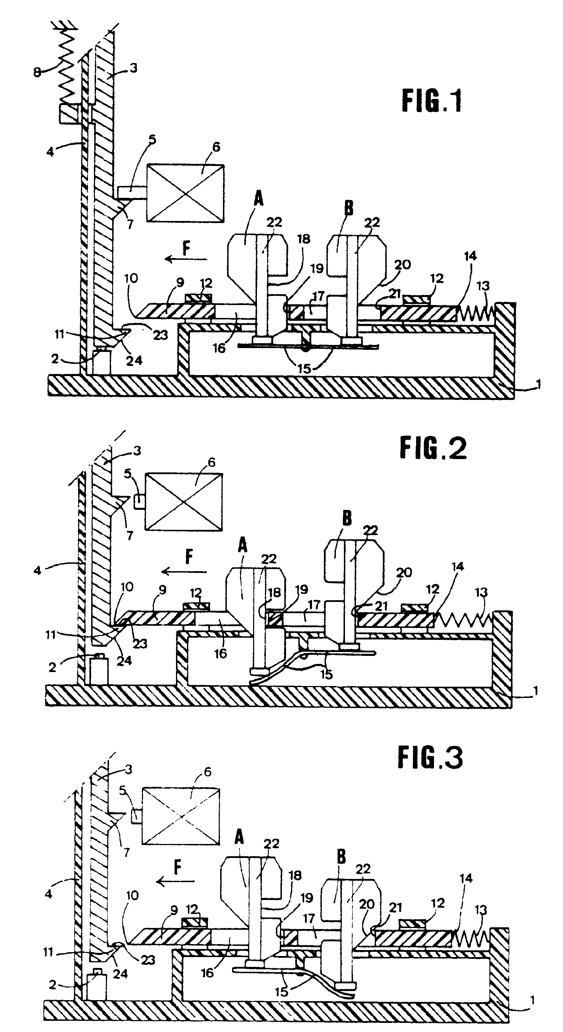

Le grille-pain représenté sur la figure 1 comporte un boîtier 1, une résistance chauffante (non représentée) commandée par un interrupteur 2 associé à une minuterie (non représentée), un chariot à pain (schématisé en 3) guidé verticalement à l'intérieur du boîtier au moyen d'un guide 4 et pouvant occuper au moins deux positions, soit une position de grillage (figure 1) pour laquelle le chariot 3 ferme l'interrupteur 2 déclenchant la minuterie, et en laquelle le chariot 3 est amené par l'utilisateur et maintenu pendant le cycle de grillage au moyen d'un doigt 5 manoeuvré par un électroaimant 6 commandé par la minuterie et qui vient en prise avec une butée 7 du chariot 3, soit une position de repos en laquelle le chariot 3 est amené au moyen d'un ressort de rappel 8, à la fin du cycle de grillage, quand le doigt 5 libère la butée 7, de manière que le pain sorte du boîtier 1.

Selon une caractéristique particulièrement avantageuse de l'invention, le grille-pain comporte en outre un dispositif de maintien au chaud du pain grillé qui comprend un verrou mobile 9 pouvant occuper deux positions, soit une position dite de maintien au chaud (figure 2) dans laquelle en fin de cycle de grillage, le chariot 3 s'étant déplacé légèrement vers sa position de repos de manière à ouvrir l'interrupteur 2, coupant ainsi l'alimentation de la résistance chauffante, l'extrémité active 10 du verrou mobile 9 est en prise avec un crochet 11 porté par le chariot 3, soit une position d'éjection automatique (figures 1 et 3) pour laquelle le verrou 9 est escamoté et n'entrave pas le déplacement du chariot 3.

Ainsi, à la fin du cycle de grillage, selon que le verrou mobile 9 est dans sa position de grillage automatique ou dans sa position de maintien au chaud, le pain grillé est, soit éjecté automatiquement hors du grille-pain, soit maintenu dans le grille-pain et, bien que la résistance chauffante ne soit plus alimentée à l'ouverture de l'interrupteur 2, la chaleur résiduelle due à la restitution des calories emmagasinées par la tôlerie du boîtier 1 est largement suffisante pour maintenir le pain grillé à la bonne température jusqu'à ce que l'utilisateur désire le consommer.

Le verrou mobile 9 est monté coulissant horizontalement grâce à des moyens de manoeuvre A-B selon une direction F transversale au déplacement du chariot 3. Le verrou ayant une forme de plaque, il coulisse entre des rails 12, solidaires du boîtier 1.

Ce coulissement du verrou mobile 9 en direction du chariot 3, dite direction de verrouillage F, est assuré par un ressort de poussée 13 agencé entre le boîtier 1 et l'extrémité non active 14 du verrou 9.

Les moyens de manoeuvre du verrou mobile 9 comprennent deux boutons poussoir A-B susceptibles d'être manoeuvrés alternativement et montés coulissant transversalement à la direction de verrouillage F à l'encontre d'une lame ressort 15 commune aux deux boutons A et B, soit un premier bouton A dit de maintien au chaud pouvant occuper une position de blocage (figures 1 et 3) pour laquelle il vient bloquer le verrou 9 dans sa position d'éjection automatique, et une position d'enclenchement (figure 2) pour laquelle il permet au verrou 9 d'occuper sa position de maintien au chaud, soit un deuxième bouton B dit d'éjection automatique pouvant occuper une position de déblocage (figure 3) pour laquelle il agit sur le verrou 9 pour le ramener dans sa position d'éjection automatique et autorise le bouton A dit de maintien au chaud à passer de sa position d'enclenchement à sa position de blocage, et une position de désenclenchement (figures 1 et 2) pour laquelle il autorise le bouton A dit de maintien au chaud à passer de sa position de blocage à sa position d'enclenchement.

Le verrou présentant deux ouvertures 16, 17 traversées par les boutons poussoir A-B, le bouton A dit de maintien au chaud comporte une encoche 18 s'ouvrant à l'opposé de la direction de verrouillage F, dans laquelle vient s'engager en position d'enclenchement (figure 2) le bord correspondant 19 de la première ouverture 16 tandis que le bouton B dit d'éjection automatique comporte une came 20 orientée à l'opposé de la direction de verrouillage F, et destinée en position de déblocage (figure 3) à venir en appui sur le bord correspondant 21 de la deuxième ouverture 17 de manière à faire coulisser le verrou 9 de sa position de maintien au chaud à sa position d'éjection automatique.

Chaque bouton A-B est guidé verticalement au moyen de nervures latérales 22 venant en prise avec des rainures correspondantes (non représentées) pratiquées dans le boîtier 1.

Selon une autre caractéristique de l'invention, le crochet 11 du chariot 3 présente, à l'opposé de la face 23 destinée à venir en prise avec l'extrémité active 10 du verrou 9, une face inclinée 24 de manière que, le verrou 9 étant dans sa position de maintien au chaud lors du déplacement du chariot de sa position de repos à sa position de grillage, la face inclinée 24 vient appuyer sur l'extrémité active 10 du verrou 9 qui coulisse vers sa position d'éjection automatique.

Les différentes étapes du fonctionnement du grille-pain vont maintenant être décrites.

Le chariot 3 est au départ dans sa position de repos, le doigt 5 de l'électroaimant 6 est escamoté. L'utilisateur place les tranches de pain dans le chariot 3 et amène le chariot 3 dans sa position de grillage (figure 1). Le chariot 3 ferme l'interrupteur 2 alimentant ainsi la résistance chauffante et déclenchant la minuterie qui commande l'électroaimant 6 de manière que le doigt 5 vienne en prise avec le chariot 3 au niveau de la butée 7. Le verrou 9 est en position d'éjection automatique, c'est-à-dire le bouton A de maintien au chaud est dans sa position de blocage et le bouton B d'éjection automatique dans sa position de désenclenchement. Si l'utilisateur n'intervient pas avant la fin du cycle de grillage, la minuterie s'arrête et commande à l'électroaimant 6 qui escamote le doigt 5 libérant ainsi la butée 7. Le ressort de rappel 8 ramène le chariot 3 dans sa position de repos, ouvrant l'interrupteur 2 qui coupe l'alimentation de la résistance chauffante, éjectant ainsi le pain grillé hors du boîtier 1.

Si au contraire l'utilisateur désire maintenir au chaud le pain grillé, il manoeuvre avant la fin du cycle de grillage le bouton A de maintien au chaud de façon à le faire passer de sa position de blocage à sa position d'enclenchement (figure 2). L'encoche 18 dudit bouton A permet au verrou 9 poussé par le ressort 13 de coulisser vers sa position de maintien au chaud. A la fin du cycle de grillage la minuterie s'arrête et commande l'électroaimant 6 qui escamote le doigt 5. Le chariot 3 ainsi libéré entame son déplacement vers sa position de repos et ouvre l'interrupteur 2 qui coupe l'alimentation de la résistance chauffante. La course du chariot est arrêtée dès que le crochet 11 vient en prise avec l'extrémité active 10 du verrou 9, maintenant le pain grillé au chaud dans le boîtier.

Quand l'utilisateur désire éjecter le pain grillé (figure 3), il manoeuvre le bouton B d'éjection automatique de façon à le faire passer de sa position de désenclenchement à sa position de déblocage. La came 20 appuie sur le bord correspondant 21 de la deuxième ouverture 17 faisant coulisser le verrou 9 à l'encontre du ressort de poussée 13 de sa position de maintien au chaud à sa position d'éjection automatique. Au cours de ce coulissement, le bouton A de maintien au chaud est ramené automatiquement en sa position de blocage par la lame ressort 15. Le crochet 11 du chariot 3 est alors libéré et le chariot 3 est ramené vers sa position de repos par le ressort de rappel 8, éjectant ainsi le pain grillé hors du boîtier 1.

Comme on le comprendra, quand le verrou 9 est dans sa position de maintien au chaud alors que le chariot 3 est dans sa position de repos, l'abaissement de ce chariot 3 dans sa position de grillage amène la face inclinée 24 du crochet 11 en appui sur l'extrémité active 10 du verrou 9 repoussant ainsi automatiquement le verrou 9 vers sa position d'éjection automatique.

## Revendications

1. Grille-pain comportant un boîtier (1), une résistance chauffante commandée par un interrupteur (2) associé à une minuterie, un chariot à pain (3) guidé à l'intérieur du boîtier et pouvant occuper au moins deux positions, soit une position de grillage pour laquelle le chariot (3) ferme l'interrupteur (2) déclenchant la minuterie, et en laquelle le chariot (3) est amené par l'utilisateur et maintenu pendant le cycle de grillage au moyen d'un doigt (5) manoeuvré par un électroaimant (6) qui vient en prise avec une butée (7) du chariot (3), soit une position de repos en laquelle le chariot (3) est amené au moyen d'un ressort de rappel (8), à la fin du cycle de grillage, quand le doigt (5) libère la butée (7), ainsi qu'en outre, un dispositif de maintien au chaud du pain grillé qui comprend un verrou (9) monté mobile selon une direction (F), dite de verrouillage, transversale au déplacement du chariot (3) et pouvant occuper deux positions, soit une position dite de maintien au chaud dans laquelle en fin de cycle de grillage, le chariot (3) s'étant déplacé légèrement vers sa position de repos de manière à ouvrir l'interrupteur (2), le verrou (9) est en prise avec un crochet (11) porté par le chariot (3), soit une position d'éjection automatique pour laquelle le verrou (9) est escamoté et n'entrave pas le déplacement du chariot (3), **caractérisé en ce que** le verrou mobile (9) est monté coulissant grâce à des moyens de manoeuvre (A-B) qui comprennent deux boutons poussoir (A-B) susceptibles d'être manoeuvrés alternativement et montés coulissant transversalement à la direction de verrouillage (F) à l'encontre d'organes élastiques (15), soit un premier bouton (A) dit de maintien au chaud pouvant occuper une position de blocage pour laquelle il vient bloquer le verrou (9) dans sa position d'éjection automatique, et une position d'enclenchement pour laquelle il permet au verrou (9) d'occuper sa position de maintien au chaud, soit un deuxième bouton (B) dit d'éjection automatique pouvant occuper une position de déblocage pour laquelle il agit sur le verrou (9) pour le ramener dans sa position d'éjection automatique et autorise le bouton (A) dit de maintien au chaud à passer de sa position d'enclenchement à sa position de blocage, et une position de désenclenchement pour laquelle il autorise le bouton (A) dit de maintien au chaud à passer de sa position de blocage à sa position d'enclenchement.

2. Grille-pain selon la revendication 1, **caractérisé en ce que** le coulissement du verrou mobile (9) en direction du chariot (3), dite direction de verrouillage (F), est assuré par des moyens élastiques (13).

3. Grille-pain selon la revendication 1 ou 2, **caractérisé en ce que**, le verrou ayant la forme d'une plaque présentant deux ouvertures (16, 17) traversées par les boutons poussoir (A-B), le bouton (A) dit de maintien au chaud comporte une encoche (18) s'ouvrant à l'opposé de la direction de verrouillage (F), dans laquelle vient s'engager en position d'enclenchement le bord correspondant (19) de la première ouverture (16), tandis que le bouton (B) dit d'éjection automatique comporte une came (20) orientée à l'opposé de la direction de verrouillage (F), et destinée en position de déblocage à venir en appui sur le bord correspondant (21) de la deuxième ouverture (17) de manière à faire coulisser le verrou (9) de sa position de maintien au chaud à sa position d'éjection automatique.

4. Grille-pain selon l'une quelconque des revendications précédentes, **caractérisée en ce que** le crochet (11) du chariot (3) présente, à l'opposé de la face (23) destinée à venir en prise avec l'extrémité active (10) du verrou (9), une face inclinée (24) de manière que, le verrou (9) étant dans la position de maintien au chaud lors du déplacement du chariot de la position de repos à la position de grillage, la face inclinée (24) vient appuyer sur l'extrémité active (10) du verrou (9) qui coulisse vers sa position d'éjection automatique.

## Patentansprüche

1. Brotröster mit einem Gehäuse (1), einem Heizwiderstand, der durch einen mit einer Zeitsteuerung verbundenen Schalter (2) gesteuert ist, einem Brotwagen (3), der im Inneren des Gehäuses geführt ist und mindestens zwei Stellungen einnehmen kann, nämlich eine Röststellung, in welcher der Wagen (3) den Schalter (2) schließt und die Zeitsteuerung auslöst und in welche der Wagen (3) durch den Benutzer gebracht und während des Röstzyklus mittels eines Fingers (5) gehalten wird, der von einem Elektromagneten (6) bewegt in Eingriff mit einem Anschlag (7) des Wagens (3) kommt, oder eine Ruhestellung, in welche der Wagen (3) am Ende des Röstzyklus mittels einer Rückholfeder (8) gebracht wird, wenn der Finger (5) den Anschlag (7) freigibt, sowie außerdem mit einer Warmhaltevorrichtung für das geröstete Brot, welche einen Riegel (9) aufweist, der in einer Richtung (F), der sogenannten Verriegelungsrichtung quer zur Verschiebung des Wagens (3) beweglich montiert ist und zwei Stellungen einnehmen kann, nämlich eine sogenannte Warmhaltestellung, in welcher am Ende des Röstzyklus, wenn sich der Wagen (3) geringfügig in Richtung auf seine Ruhestellung verschoben hat und so den Schalter (2) öffnet, der Riegel (9) in Eingriff mit einem vom Wagen (3) getragenen Haken (11) ist, oder eine automatische Auswurfstellung, in welcher der Riegel (9) zurückgezogen ist und die Verschiebung des Wagens (3) nicht behindert, **dadurch gekennzeichnet,** daß der bewegliche Riegel (9) durch Betätigungselemente (A-B) verschiebbar gehalten ist, welche zwei Druckknöpfe (A-B) aufweisen, die abwechselnd betätigt werden können und quer zur Verriegelungsrichtung (F) gegen die Wirkung von elastischen Elementen (15) verschiebbar gehalten sind, nämlich ein erster sogenannter Warmhalteknopf (A), der eine Blockierstellung einnehmen kann, in welcher er den Riegel (9) in seiner automatischen Auswurfstellung blockiert, und eine Raststellung, in welcher er dem Riegel (9) ermöglicht, seine Warmhaltestellung einzunehmen, und ein zweiter sogenannter automatischer Auswurfknopf (B), der eine Ausrückstellung einnehmen kann, in welcher er auf den Riegel (9) einwirkt, um ihn in seine automatische Auswurfstellung zurückzubringen und dem sogenannten Warmhalteknopf (A) ermöglicht, aus seiner Raststellung in seine Blockierstellung zu gelangen, und eine Entriegelungsstellung, in welcher er dem sogenannten Warmhalteknopf (A) ermöglicht, aus seiner Blockierstellung in seine Raststellung zu gelangen.

2. Brotröster nach Anspruch 1, **dadurch gekennzeichnet,** daß die Verschiebung des beweglichen Riegels (9) in Richtung des Wagens (3), der sogenannten Verriegelungsrichtung (F) durch elastische Vorrichtungen (13) bewirkt wird.

3. Brotröster nach Anspruch 1 oder 2, **dadurch gekennzeichnet,** daß der Riegel die Form einer Platte mit zwei Öffnungen (16, 17) hat, welche von den Druckknöpfen (A-B) durchsetzt ist, der sogenannte Warmhalteknopf (A) eine Ausnehmung (18) aufweist, die sich entgegengesetzt zur Verriegelungsrichtung (F) öffnet und in die in der Raststellung die entsprechende Kante (19) der ersten Öffnung (16) eingreift, während der sogenannte automatische Auswurfknopf (B) eine entgegengesetzt zur Verriegelungsrichtung (F) gerichtete Nocke (20) aufweist, die in der Ausrückstellung gegen die entsprechende Kante (21) der zweiten Öffnung (17) in solcher Weise in Anschlag kommt, daß sie den Riegel (9) aus seiner Warmhaltestellung in seine automatische Auswurfstellung verschiebt.

4. Brotröster nach einem der vorangehenden Ansprüche, **dadurch gekennzeichnet,** daß der Haken (11) des Wagens (3) gegenüber der Seite (23), die in Eingriff mit dem wirksamen Ende (10) des Riegels (9) kommt, eine Schrägfläche (24) aufweist, so daß, wenn sich der Riegel (9) bei der Verschiebung des Wagens aus der Ruhestellung in die Röststellung in der Warmhaltestellung befindet, die Schrägfläche (24) gegen das wirksame Ende (10) des Riegels (9) drückt, der in seine automatische Auswurfstellung verschoben wird.

## Claims

1. A bread toaster comprising a casing (1), a heating resistor controlled by a switch (2) connected to a timer, a bread carrier (3) guided inside the casing and able to occupy at least two positions, either a toasting position in which the carrier (3) closes the switch (2) triggering the timer, into which position the carrier (3) is brought by the user and in which it is held during the toasting cycle by means of a finger (5) moved by an electromagnet (6) which becomes engaged on a stop (7) on the carrier (3), or a resting position into which the carrier (3) is brought by means of a return spring (8) at the end of the toasting cycle when the finger (5) releases the stop (7), and comprising in addition a device for keeping the toasted bread hot which comprises a locking bar (9) mounted to be movable in a direction (F), called the locking direction, transverse to the movement of the carrier (3), an able to occupy two positions, either a position called a keeping hot position in which, at the end of the toasting cycle, the carrier (3) being moved slightly towards its resting position so as to open the switch (2), the locking bar (9) is engaged with a hook (11) borne by the carrier (3), or an automatic ejection position in which the locking bar (9) is retracted and does not impede the movement of the carrier (3), characterized in that the movable locking bar (9) is mounted to slide thanks to manipulating means (A-B) which comprise two push buttons (A-B) which can be moved alternatively and are mounted to slide transversely to the locking direction (F) against the action of elastic means (15), namely a first button (A), called the keeping hot button, which can occupy a blocking position in which it blocks the locking bar (9) in its automatic ejection position or an interlock position in which it allows the locking bar (9) to occupy its keeping hot position, and a second button (B), called the automatic ejection button, which can occupy a deblocking position in which it acts on the locking bar (9) to return it to its automatic ejection position and allows the button (A), called the keeping hot button, to pass from its interlock position to its blocking position and an interlock release position in which it allows the button (A), called the keeping hot button, to pass from its blocking position to its interlock position.

2. A bread toaster according to claim 1, characterized in that the sliding of the movable locking bar (9) in the direction towards the carrier (3), called the locking direction (F), is ensured by elastic means (13).

3. A bread toaster according to claim 1 or claim 2, characterized in that the locking bar (9) has the form of a plate comprising two openings (16, 17) through which the push buttons (A-B) pass, the button (A), called the keeping hot button, comprises a recess (18), opening in the opposite direction to the locking direction (F), in which the corresponding edge (19) of the first opening (16) becomes engaged in the interlock position, whilst the button (B), called the automatic ejection button, comprises a cam (20) orientated in the opposite direction to the locking direction (F) and adapted to bear, in the deblocking position, on the corresponding edge (21) of the second opening (17) so as to cause the locking bar (9) to slide from its keeping hot position to its automatic ejection position.

4. A bread toaster according to any one of the preceding claims, characterized in that the hook (11) on the carrier (3) comprises, on the opposite side to the surface (23) adapted to become engaged with the working end (10) of the locking bar (9), a sloping surface (24) such that, the locking bar (9) being in its keeping hot position during the movement of the carrier from its resting position to its toasting position, the sloping surface (24) comes to bear on the working end (10) of the locking bar (9) which slides towards its automatic ejection position.

FIG.1

FIG.2

FIG.3